# EUROPÄISCHE PATENTANMELDUNG

(11) **EP 0 884 609 A1**
(43) Veröffentlichungstag der Anmeldung: **16.12.1998**
(21) Anmeldenummer: 97109447.9
(22) Anmeldetag: 11.06.1997
(51) Int. Cl.: G01V 3/15

(54) **Metalldetektorgestänge**

(71) Anmelder: Vallon GmbH, D-72800 Eningen (DE)
(72) Erfinder: Vallon, Gerhard, 72800 Eningen u. A. (DE)
(74) Vertreter: Klocke, Peter, Dipl.-Ing.

(57) **Zusammenfassung**

Metalldetektorgestänge mit einer Halterung, die die Elektronik, Handgriff (5) und Armschale (7) umfaßt, die wenigstens teilweise entlang dem Tragrohr (3) bewegbar und an diesem verdrehsicher arretrierbar ist. Das Tragrohr ist als Teleskoptragrohr ausgebildet und kann mit seinem dicksten Rohr durch die Halterung, am anderen Ende herausragend, durchgeschoben werden. Dies ermöglicht ein nahes Heranführen der Sonde an die Halterung, was insbesondere bei der Benutzung des Metallsondengestänges beim Kriechen von Vorteil ist.

## Beschreibung

Die vorliegende Erfindung betrifft ein Metalldetektorgestänge, an dessen vorderem Ende eine schwenkbar gelagerte Spule und im Bereich des oberen Endes eine Elektronik, ein Handgriff sowie eine Armschale angeordnet sind.

Bei den bekannten Metalldetektoren bestehen diese beispielsweise aus einem zusammenklappbaren Gestänge mit hinten fest anmontierter Elektronik, Handgriff, Armschale und einer vorne schwenkbar gelagerten Spule. Dieses Gerät hat den Vorteil, daß es aus einem Stück besteht und keine vielen Einzelteile hat. Der Nachteil besteht darin, daß die Tragestange nicht der Größe des Bedieners angepaßt werden kann und das die Elektronik aufnehmende Gehäuse bei der Bedienung hinderlich ist. Es ist bekannt, beispielsweise aus der DE 4318563 A1 das Gestänge als Teleskoptragrohr auszubilden, wobei hier jedoch weiterhin der Abstand zwischen der Spule und dem Bediener für eine Anwendung beispielsweise in Büschen, Unterholz oder Gestrüpp relativ groß ist.

Der vorliegenden Erfindung liegt daher die Aufgabe zugrunde, eine Möglichkeit anzugeben, die eine bedienerfreundliche Handhabung sowohl beim normalen Gehen als auch beim Kriechen nahe der Erde ermöglicht.

Diese Aufgabe wird erfindungsgemäß durch ein Metalldetektorgestänge mit den Merkmalen des Hauptanspruchs gelöst. Weitere vorteilhafte Ausgestaltungen sind den Unteransprüchen zu entnehmen.

Das Metalldetektorgestänge weist eine Halterung auf, die die Elektronik, Handgriff und Armschale umfaßt und die wenigstens teilweise entlang dem Tragrohr bewegbar und an diesem verdrehsicher arretierbar ist. Die Haltung besteht im wesentlichen aus einem Gehäuse, das entweder auf dem Tragrohr in Tragrohrlängsrichtung beweglich geführt oder, gemäß einer bevorzugten Ausführungsform, eine Durchführung aufweist, in der das Tragrohr bei der Bewegung der Haltung geführt ist. Durch diese Ausbildung ist es möglich, die am unteren Ende des Tragrohres angeordnete Spule möglichst nahe an die Halterung heranzubringen.

Vorteilhafter Weise wird die Verdrehsicherung mittels einer in Längsrichtung der Durchführung verlaufenden Nut/Federverbindung in der Durchführung gewährleistet.

Gemäß einer besonders bevorzugten Ausführungsform ist das Tragrohr als Teleskoptragrohr ausgebildet, daß aus mehreren ineinanderschiebbaren Teleskopteilen besteht und in der gewünschten Länge einstellbar ist. Dabei kann das obere Teleskoprohr mit dem größten Durchmesser bis zu einem Anschlag an dem der Spule zugewandten Ende in das Gehäuse der Halterung eingeschoben werden. Durch die entsprechende Ausbildung der Halterung ragt das andere Ende dieses Teleskoprohres aus der Halterung heraus. Die Einstellung der gewünschten Länge kann mittels einer Klemmverbindung entsprechend der DE 4318563 A1 erfolgen.

Um noch eine weitergehende Bedienerfreundlichkeit zu gewährleisten, weist die Halterung einen Handschutz auf, der auf der der Sonde zugewandten Seite des Handgriffs angeordnet ist. Damit ist die Hand der Bedienperson vor Verletzungen geschützt, die insbesondere dann auftreten können, wenn das Teleskoptragrohr vollständig zusammengefahren ist und die Halterung sich nahe der Spule befindet.

Um die Halterung einerseits stabil und anderseits möglichst wenig den Bediener behindernd auszubilden, sind der Handschutz und der Handgriff gemäß einer weiteren vorteilhaften Ausgestaltung einstückig ausgebildet und fest mit der Halterung verbunden. Das von der Detektorspule kommende Detektorkabel befindet sich im inneren des Tragrohres und wird am hinteren Ende herausgeführt und über eine Steckverbindung in der Halterung mit der Elektronik verbunden.

Gemäß einer weiteren bevorzugten Ausführungsform sind die Elektronik und sämtliche Bedienungselemente am Handgriff angeordnet. Des weiteren ist die Armschale am hinteren Ende der Halterung in Tragrohrlängsrichtung verschiebbar.

Das erfindungsgemäß ausgestattete Metalldetektorgestänge weist somit ein kompaktes Gehäuse für die Elektronik auf, das die Bedienungsperson bei ihrer Tätigkeit möglichst wenig behindert. Des weiteren ist ein Handschutz vor dem Handgriff für Sucharbeiten in dichtem Gestrüpp vorhanden, wobei durch die verschiebbare Armschale diese individuell auf den festen Handgriff eingestellt werden kann. Durch das im Tragrohr frei durchgeführte Detektorkabel von der Detektorspule, das am hinteren Ende des Tragrohrs herausgeführt und in die Elektronik eingesteckt wird, gibt es einen einfachen Teilewechsel bei Reparaturen.

Nachfolgend wird die Erfindung anhand eines Ausführungsbeispiels in Verbindung mit den begleitenden Zeichnungen näher erläutert. Es stellen dar:
- Figur 1: die schematische Darstellung des Metalldetektorgestänges mit Sonde am unteren Ende;
- Figur 2: eine Seitenansicht des Metallsondengestänges mit zusammengeschobenem Teleskoptragrohr;
- Figur 3: eine Ansicht der Rückseite der Halterung;
- Figur 4: eine Vorderansicht des Handschutzes mit den Bedienungselementen und
- Figur 5: eine Ansicht des Handgriffs in Richtung Sonde.

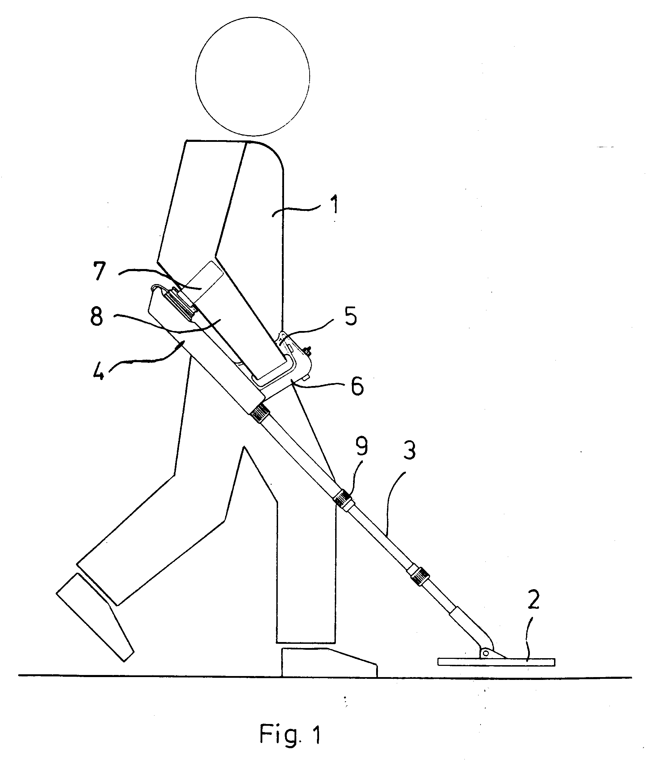

Wie aus Figur 1 ersichtlich, kann eine Bedienungsperson 1 im aufrechten Gang mit dem Metalldetektorgestänge eine Sonde bzw. Spule 2 über den Boden führen. Das Gestänge besteht aus einem Teleskoptragrohr 3 mit drei ineinanderschiebbaren Rohren sowie einer Halterung 4 , an der ein Handgriff 5, ein Handschutz 6, der fest mit dem Handgriff 5 verbunden ist, sowie eine Armschale 7 angeformt ist. Die Armschale 7 ist in Längsrichtung um ca. ± 5 cm verschiebbar an einer am Gehäuse 15 der Halterung 4 angeformten Führung 10 angeordnet, um an den Unterarm 8 der Bedienperson angepaßt zu werden. Die einzelnen Rohre des Teleskoptragrohres 4 sind mittels Rändelmuttern 9 und zugehörigen bekannten Klemmverbindungen in ihrer jeweiligen Position fixierbar. Das am Ende aus dem Teleskoptragrohr 3 herauskommende Detektorkabel ist bei dem Ausführungsbeispiel um die Führung 10 für die Armschale 7 gewickelt und in die Halterung 4 eingesteckt. Die maximale Länge des Metalldetektorgestänges vom hinteren Ende der Halterung 4 bis zur Befestigung der Sonde 2 beträgt in dem Ausführungsbeispiel ca. 1550 mm.

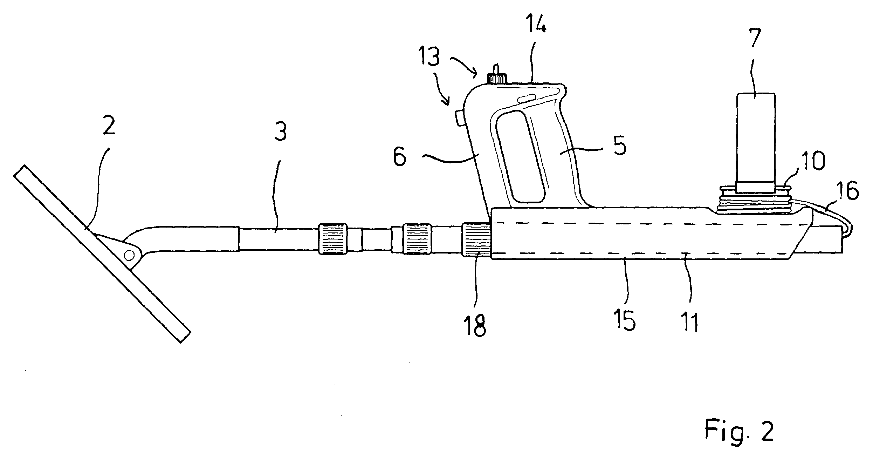

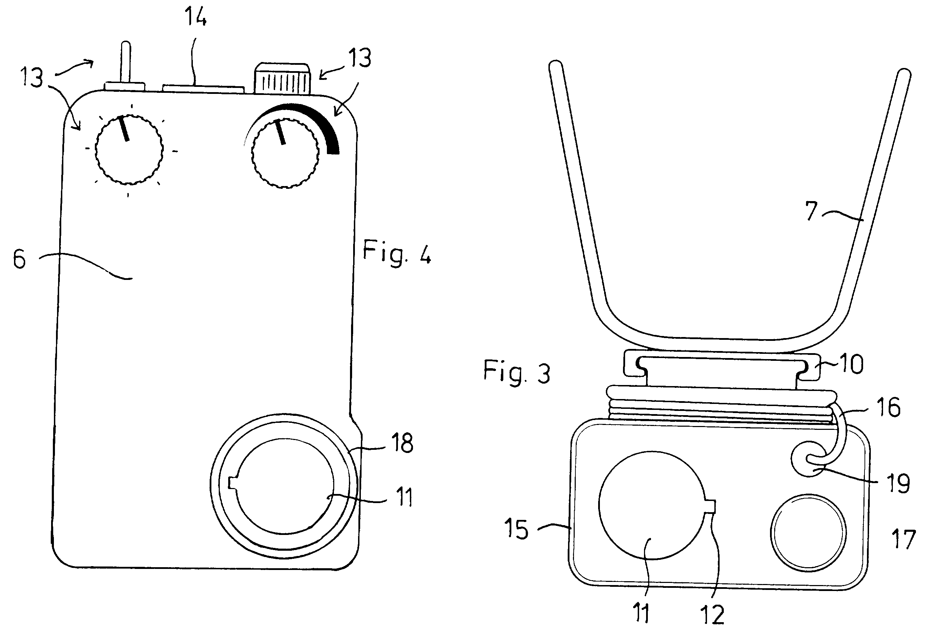

Figur 2 zeigt in etwas vergrößerter Darstellung das Metalldetektorgestänge mit der Sonde 2 am Ende, wobei in dieser Darstellung die einzelnen Rohre des Teleskoptragrohres 3 ineinandergeschoben sind. Die einzelnen Rohre sind dabei bis zum jeweiligen Anschlag ineinander geschoben, wobei die Rändelmutter 18 des dicksten Rohres sich direkt am Gehäuse 15 befindet. Das hintere Ende des dicksten Rohres ragt um ca. 20 cm aus dem Gehäuse 15 heraus. Dies ist ohne weiteres möglich, da, wie aus Figur 3 ersichtlich, im inneren der Halterung 4 eine Durchführung 11 vorgesehen ist, durch die das Teleskoptragrohr 3 hindurchgeschoben werden kann. Die Verdrehsicherung erfolgt mittels einer in der Durchführung 11 vorgesehenen Längsnut 12, in die eine entsprechende (nicht dargestellte) Feder an dem Teleskoptragrohr eingreift. An dem Handgriff 5 sowie an dem Handschutz 6 sind Bedienungselemente 13 sowie Lautsprecher 14 (Figur 4) angeordnet. Im zusammengeschobenen Zustand beträgt die Länge ca. 1000 mm. Handgriff 5 und Handschutz 6 sind als einstückiges oder zusammenhängendes Teil ausgebildet und gehen in einander über.

Figur 3 zeigt noch in einer vergrößerten Abbildung die Anbringung der Armschale 7 und deren Beweglichkeit in Längsrichtung über eine entsprechend ausgebildete Führung 10. Außerdem ist aus dieser Ansicht das Gehäuse 15 der Halterung 4 ersichtlich, in dem sich die Durchführung 11 mit der Nut 12 in die eine entsprechende Feder am Tragrohr eingreift. Des weiteren ist in dem Gehäuse 15 ein Batteriefach 17 für die Aufnahme von 3-4 Monozellen vorgesehen. Das Detektorkabel wird mittels eines Steckers 19 ebenfalls in dem rückwärtigen Bereich des Gehäuses 15 eingesteckt. Damit es nicht stört, kann das Detektorkabel, wie dargestellt, aus der Tragrohr kommend (vergl. Fig. 2) um die Führung 10 gewickelt und dann eingesteckt werden. In dieser Figur ist das Tragrohr und der aus dem Tragrohr kommende Teil des Kabels nicht dargestellt.

Figur 4 zeigt in vergrößerter Darstellung eine Vorderansicht Handschutzes 6 mit den Bedienungselementen 13 und dem Lautsprecher 14. Die Bedienungselemente umfassen in diesem Ausführungsbeispiel, einen Lautstärkeregler und einen Programmwähler auf der Vorderseite des Handschutzes 6 und auf der Oberseite einen Kippschalter für die Wahl des Suchmodus, sowie den Lautsprecher 14 und einen Drehknopf für die Ein/Ausschaltung und Einstellung der Empfindlichkeit. Aus dieser Ansicht ist noch schematisch die Durchführung 11 sowie die obere Rändelmutter 18 ersichtlich. Im Inneren des Handschutzes 6 befindet sich die nicht dargestellte Elektronik. Der Handgriff 5 sowie der Handschutz 6 sind an dem der Halterung abgewandten Ende miteinander verbunden und an das Gehäuse 15 angeformt.

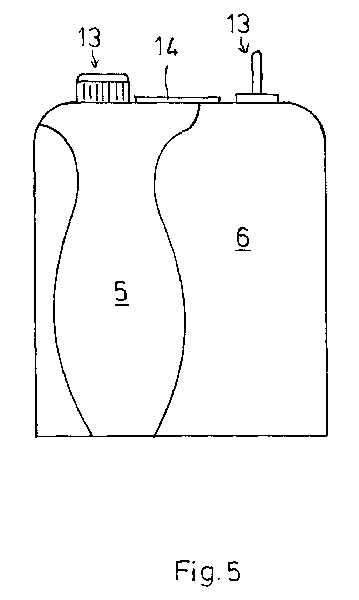

Figur 5 zeigt eine Ansicht auf den Handgriff 5 mit dahinter angeordnetem Handschutz 6 sowie den auf der Oberseite von Handschutz 6 angeordneten Bedienungselementen 13 und Lautsprecher 14.

## Patentansprüche

1. Metalldetektorgestänge mit einem Tragrohr, an dessen vorderen Ende eine schwenkbar gelagerte Spule und im Bereich des oberen Endes eine Elektronik, ein Handgriff sowie eine Armschale angeordnet sind, **gekennzeichnet durch** eine Halterung (4), die die Elektronik, Handgriff(5) und Armschale (7) umfaßt und die wenigstens teilweise entlang dem Tragrohr (3) bewegbar und an diesem verdrehsicher arretierbar ist.

2. Metalldetektorgestänge nach Anspruch 1, **dadurch gekennzeichnet,** daß die Halterung (4) eine Durchführung (11) aufweist, in der das Tragrohr (3) bei der Bewegung der Halterung (4) entlang des Tragrohres (3) geführt ist.

3. Metalldetektorgestänge nach Anspruch 2, **dadurch gekennzeichnet,** daß die Verdrehsicherung mittels einer in Längsrichtung der Durchführung (11) verlaufenden Nut/Federverbindung in der Durchführung (11) erfolgt.

4. Metalldetektorgestänge nach einem der vorangegangenen Ansprüche, **dadurch gekennzeichnet,** daß das Tragrohr (3) als Teleskoptragrohr ausgebildet ist, das aus mehreren ineinanderschiebbaren Teleskopteilen besteht und in der gewünschten Länge einstellbar ist.

5. Metalldetektorgestänge nach einem der vorangegangenen Ansprüche, **dadurch gekennzeichnet,** daß die Halterung (4) einen Handschutz (6) aufweist, der auf der der Sonde (2) zugewandten Seite des Handgriffs (5) angeordnet ist.

6. Metalldetektorgestänge nach Anspruch 5, **dadurch gekennzeichnet,** daß der Handschutz (6) und Handgriff (5) einstückig ausgebildet und fest mit der Halterung (4) verbunden sind.

7. Metalldetektorgestänge nach einem der vorangegangenen Ansprüche, **dadurch gekennzeichnet,** daß die Elektronik in dem Handschutz (6) und/oder dem Handgriff (5) angeordnet ist.

8. Metalldetektorgestänge nach einem der vorangegangenen Ansprüche, **dadurch gekennzeichnet,** daß das im Tragrohr (3) durchgeführte Detektorkabel (16) von der Detektorspule am hinteren Ende des Tragrohres herausgeführt und über eine Steckverbindung in der Halterung (4) mit der Elektronik verbunden ist.

9. Metalldetektorgestänge nach einem der vorangegangenen Ansprüche, **dadurch gekennzeichnet,** daß die Armschale (7) am hinteren Ende der Halterung in Tragrohrlängsrichtung verschiebbar ist.

10. Metalldetektorgestänge nach einem der vorangegangenen Ansprüche, **dadurch gekennzeichnet,** daß sämtliche Bedienungselemente (13), vorzugsweise einschließlich Lautsprecher (14) für die Detektionsanzeige, am Handgriff(5) bzw. Handschutz (6) angeordnet sind.
